# EUROPÄISCHE PATENTANMELDUNG

(11) **EP 2 062 666 A1**
(43) Veröffentlichungstag der Anmeldung: **27.05.2009**
(21) Anmeldenummer: 08019561.3
(22) Anmeldetag: 08.11.2008
(51) Int. Cl.: B22C 9/10, C08L 23/10, C08L 91/06

(54) **Metallocene-katalysierte Polyolefine enthaltende Wachs- und Polymerformulierungen mit und ohne Füllstoff, welche sich besonders für spanabhebende Modellerzeugungsverfahren eignen sowie deren Verwendung für Genauguss-Prozesse, Hohlkernerzeugung speziell im Dental-, Schmuck- und Feinwerktechnikbereich**

(30) Priorität: 15.11.2007 DE 102007054614
(71) Anmelder: Clariant International Ltd., 4132 Muttenz 1 (CH)
(72) Erfinder: Diem, Hermann, 86517 Wehringen (DE); Fell, Rainer, Dr., 86368 Gersthofen (DE)
(74) Vertreter: Hütter, Klaus

(57) **Zusammenfassung**

Metallocene-katalysierte Polyolefine enthaltende Wachs- und Polymerformulierungen mit und ohne Füllstoff eignen sich besonders für die Verwendung in Genauguss-Prozessen und Hohlkernerzeugung.

Die Erfindung betrifft Wachsformulierung enthaltend:
a) metalocen-katalysierte Polyolefine mit einem Schmelzpunkt von 80 °C bis 150 °C, einer Viskosität von 60 bis 20.000 mPa·s bei 140 °C sowie einem Meltflowindex (MFI) von 30 bis 3.000 g/10min bei einer Belastung von 2,16 kg und einer Prüftemperatur von 230 °C.
b) Wachse und Wachsderivate mit einem Schmelzpunkt von 80 °C bis 165 °C und einer Viskosität von 50 bis 30.000 mPa·s bei 140 °C.
c) Polyolefine mit niedriger Dichte (LDPE) mit einem Schmelzpunkt von 80 °C bis 150 °C und einem Meltflowindes (MFI) von 30 g/10 min bis 3.000 g/10 min bei einer Belastung von 2,16 kg und einer Temperatur von 230 °C gemessen.

Die Wachsformulierungen werden insbesondere für spanabhebende Modellerzeugungsverfahren und Hohlkernerzeugung im Dental-, Schmuck- und Feinwerktechnikbereich eingesetzt.

## Beschreibung

Die vorliegende Erfindung betrifft metallocene-katalysierte Polyolefine enthaltende Wachs- und Polymerformulierungen mit und ohne Füllstoff zur Herstellung von Gussteilen, welche im Genauguss-Prozess / Feingussverfahren erzeugt werden. Die Modellerzeugung (Positivmodell/ Wachsmodell) wird dabei durch formgebende (spanabhebende) Fertigungsverfahren (Modellerzeugungsverfahren) wie beispielsweise Bohren, Drehen, Feilen, Fräsen, Hobeln (Stoßen), Raspeln, Räumen, Reiben, Sägen und Schaben sowie Hohnen, Strahlen (Läppen), Schleifen und Schnitzen hergestellt.

### Stand der Technik:

Der Genauguss-Prozess, auch bekannt unter dem Namen "lost-wax"-Prozess ist seit Jahrhunderten in Gebrauch. Im Genauguss-Prozess wird eine feuerfeste Gießform um das Wachsmodell aufgebaut. Nach dem Aufbau und Trocknen wird die Gießform erhitzt, so dass das Wachs schmilzt und abläuft. Die erhaltene Gussform wird gebrannt und wird dann als Negativform für den Metallguss benutzt. Im Allgemeinen schließt der Genauguss-Prozess einen Teilprozess (Modellerzeugung des Positivmodells) ein. Das Modell kann zum einen erzeugt werden, indem ein Wachs in ein Werkzeug (Urform) injiziert wird. Das Werkzeug stellt in diesem Fall den zu produzierenden Gegenstand als Negativform dar. So werden Wachsduplikate als Modelle des zu produzierenden Gegenstandes als Positivform produziert. Zum anderen kann das Modell (Einzel- oder Serienmodelle) durch formgebende Produktionstechniken wie beispielsweise spanabhebende Bearbeitungsverfahren aus Vollmaterial hergestellt werden. Die im Anschluss folgenden Prozessschritte dienen der Erzeugung einer feuerfesten Gießform um das Wachsmodell.

Teilschritte sind das Eintauchen des Wachsmodells oder vieler an einen Ast verklebter Wachsmodelle in eine keramische Aufschlämmung, anschließendes Besanden, Trocknen und Wiederholen dieser Vorgänge, bis die gewünschte Schichtdicke der Schale erreicht ist.
Dann wird nach dem Trocknen der Schale das Wachs durch Erwärmen entfernt. Dabei wird die Gussform meist im Autoklaven mit Wasserdampf unter Druck erhitzt, damit das geschmolzene Wachs ausfließen kann. Auch drucklose Verfahren mit anderen Heizmethoden sind bekannt. Nach dem Entwachsen wird die Keramik bei hohen Temperaturen gebrannt und somit ausgehärtet. Dabei werden auch Reste des Wachses verbrannt bevor das Metall eingegossen wird. Es muss gewährleistet sein, dass alle Spuren der Bestandteile der Wachsformulierung von der keramischen Gussform entfernt wurden, um Defekte am Metallgussstück zu vermeiden. Als nächster Schritt wird geschmolzenes Metall bzw. eine Metalllegierung in die heiße Gussform gegossen. Nach Abkühlen und Erstarrung des Metalls wird die keramische Gussform vom Gussobjekt entfernt. Der Rohguss wird dann einem weiteren Finishprozess zugeführt, der Patinieren, Entgraten und Entfernen der Angussteile enthält.

Bei der Herstellung von Positivmodellen durch spanabhebende Bearbeitungsverfahren wie beispielsweise durch das Fräsen sind Herstellungsprobleme dann möglich, wenn das Wachs (Fräswachs) einer speziellen Wachsformulierung eine nicht ausreichende Bearbeitbarkeit im Hinblick auf mechanische Festigkeit und Spanabnahme aufweist. Die Bearbeitbarkeit beziehungsweise Herstellung von Wachsmodellen über CNC-gesteuerte (computerized numerical control) Fräsmaschinen wird beispielshalber bereits in Patent US 2006 /004 477 A1 beschrieben. Hier werden gemäß dem Stand der Technik elektronische erfasste topologische Daten via CAD (computer aided design) bzw. CAM (computer aided manufacturing) erstellt, bearbeitet und für CNC-gesteuerte (computerized numerical control) Bearbeitungsmaschinen (Fräsmaschine, Drehbank, etc.) zur Modellerzeugung bereitgestellt. Wachsmodelle werden in der Regel maschinell in Einzelfertigung bis hin zu Großserien gefertigt. Daneben können Wachsmodelle (meist nur Einzelfertigung und Kleinserien) auch manuell durch spanabhebende Bearbeitung hergestellt werden. Im Allgemeinen werden neben guter spanabhebender Bearbeitbarkeit mehrere Anforderungen an eine Wachsformulierung gestellt.

Um ein Werkstück mit hoher dimensionaler Genauigkeit abbilden zu können muss die Wachsformulierung eine ausreichende mechanische Festigkeit (Härte, Elastizitätsmodul, etc.) bei guter bis sehr guter spanabhebender Bearbeitbarkeit aufweisen, um filigrane Konstruktionen und entsprechend geforderte Oberflächenprofile wie beispielsweise Hohlkerne detailgetreu realisieren zu können. Zudem werden an eine Wachsformulierung beim Ausschmelzvorgang (dewaxing) eine sehr niedrige Viskosität sowie ein rückstandsloses Ausschmelzen im Negativmodell gefordert. Damit ausgeschlossen werden kann, dass Reste der Wachsformulierung im Negativmodell verbleiben, welche zu Fehlstellen (Deformationen) am Fertigteil (Gussstück) führen können. Die Wachsformulierungen werden in der Regel bei Temperaturen über 100 °C ausgeschmolzen. Das Ausbrennen und Härten der Negativformen (keramische Schalen) erfolgt bei Temperaturen über 250 °C bevorzugt über 500 °C besonders bevorzugt über 750 °C. Da das Wachsmodell (Positivmodell) in der Regel ein eins zu eins Modell des zu produzierenden Metallgussstückes ist, pflanzen sich Ungenauigkeiten und Fehlstellen ins Endprodukt fort. Wachsformulierungen müssen somit ohne Rückstände und ohne Aschebildung verbrennen resp. auf eine andere Art und Weise aus dem Negativmodell entfernt werden. Eigenschaften wie ausreichende mechanische Festigkeit sowie gute spanabhebende Bearbeitbarkeit gegenüber Eigenschaften wie gutes und rückstandsloses Ausschmelzverhalten, geringe thermische Volumenänderung und glatte detailgetreue Oberflächen stehen bei den bekannten Wachsformulierungen meist konträr zueinander. Für den Fachmann ist dies stets eine Herausforderung das Optimum einer Wachsformulierung zu finden.

Eine Lösung zur Erhöhung der mechanischen Festigkeit und Verbesserung der spanabhebenden Bearbeitbarkeit der meist auf Basis von Parafinen erzeugten Wachsformulierungen wurde durch den Zusatz von verschiedenen Wachsen und Polymeren sowie durch den Zusatz von Füll- und Verstärkungsstoffen erreicht. Der Einsatz von Füll- und Verstärkungsstoffen hat zwar einige Eigenschaften der Wachsformulierungen für den Genauguss verbessert, hat aber auch einige bestehende Probleme nicht lösen können und hat auch neue Probleme mit sich gebracht. Teilweise neigen diese Wachsformulierungen beim Fräsen nach wie vor zum Schmieren und zeigen ein eher schlechtes Ausschmelzverhalten als Wachsformulierungen ohne Füll-und Verstärkungsstoffe.

Unter verschiedenen, für den Einsatz als Füllstoffe für Genauguss-Wachsformulierung vorgeschlagene Materialien sind zum Beispiel vernetztes Polystyrol und Polyethylenterephthalat, Kreide, Ruß, Sand, zu nennen. Nicht alle verändern alle relevanten physikalischen Eigenschaften in die richtige Richtung. So haben die in US-A-3,465,808 beschriebenen Polystyrol-Füllstoffe die Neigung dazu, dass das Wachs beim Ausschmelzen zuerst abfließt, aber der Polystyrol-Füllstoff in den Kavitäten zurückbleibt und dazu tendiert die Gussform aufzubrechen.

Hauptnachteil bei der Verwendung reaktiver Füllstoffe (z. B. Terephtalsäure) ist die Möglichkeit, dass beispielsweise Säure mit Bestandteilen der Gussformmasse reagiert und damit die Oberflächengüte und auch die Dimensionsgenauigkeit der Gussstücke beeinträchtigt. Weiter kann ein hoher Wärmeausdehnungskoeffizient bedingen, dass sich das Wachs beim Ausschmelzen zu schnell thermisch ausdehnt und damit den Mantel der Gussform zerbricht (shell cracking)

Inerte, polymere Füll- und Zusatzstoffe reagieren zwar nicht mit Bestandteilen der Gussformmasse, haben aber eine niedrige thermische Leitfähigkeit und sind während des Ausschmelzprozesses (Dewaxing) schwer aus der Gussform zu entfernen. Deshalb verbleiben beim Verbrennen des zurückgebliebenen Materials signifikante Aschereste in der Gussform, die sich dann an der Oberfläche des Gussstückes als Fehlstellen bemerkbar machen. Oft werden Polystyrol-, Acryl-, Polyurethan-Polymere, Polypropylene als inerte polymere Füllstoffe eingesetzt. Die Dichten dieser Füllstoffe liegen in der Regel über 1 kg/dm³ und sind im Allgemeinen signifikant höher als die Dichten der restlichen Komponenten einer Genauguss-Wachsformulierung. Dies hat zur Folge, dass Sedimentationsprozesse verstärkt auftreten und die Qualität der Genauguss-Wachsformulierung negativ beeinflussen.

Es war daher Aufgabe der Erfindung, Wachsformulierungen für den Genauguss-Prozess zur Verfügung zu stellen die die oben genannten Nachteile nicht aufweisen" wie z. B. schlechte spanabhebende Bearbeitbarkeit, ungenügende mechanische Festigkeit sowie schlechtes Auslaufverhalten (Ausschmelzverhalten), hohe Restaschegehalte, zum Wachsgrundkörper stark unterschiedliche thermische Leitfähigkeit und mögliche Reaktion von chemischen Gruppen mit Bestandteilen der Gussformmasse.

Die vorliegenden Aufgabe wird überraschend durch eine Zusammensetzung gelöst, die
a) eine Wachsformulierung enthaltend ein oder mehrere Polyolefine
   - mit einem Schmelzpunkt im Bereich von 80 bis 165 °C bei einer Viskosität von < 400 mPa·s bei 140 °C,
   - einem Erweichungspunkt Ring/Kugel im Bereich von 50 bis 165 °C,
   - einer Schmelzviskosität, gemessen bei einer Temperatur von 140 °C, im Bereich von 30 bis 40.000 mPa·s und
   - einer Glasübergangstemperatur Tg von maximal -10 °C,
   wobei bevorzugt mindestens ein Polyolefin durch metallocen-katalytische Polymerisation hergestellt wurde
   und
b) gegebenenfalls ein oder mehrere Füllstoffe enthält, wobei der Schmelzpunkt der Zusammensetzung < 165 °C, bevorzugt < 100 °C ist, bei einer Viskosität von < 10.000 mPa·s bei 140 °C.

Bevorzugt liegt der Schmelzpunkt der erfindungsgemäßen Zusammensetzung < 80 °C bei einer Viskosität von < 5.000 mPa·s bei 140 °C, besonders bevorzugt von < 10.000 mPa·s bei 140 °C. Der Schmelzpunkt der eingesetzten Polyolefine liegt vorzugsweise im Bereich von 80 bis 165 °C, bei metallocen-katalysierten Polyolefinen liegt insbesondere im Bereich von 90 bis 150 °C und einer Viskosität von < 400 mPa·s bei 140 °C.
Die verwendeten Polyolefine weisen eine sehr hohe Schmelzenthalpie im Bereich von 70 bis 280 J/g bei Dichten von 0,9 kg/dm³ bis 0,97 kg/m³ auf.

Die Wachsformulierung a) enthält in einer bevorzugten Ausführungsform ein oder mehrere metallocene-katalysierte Polyethylene mit einem Tropfpunkt von < 135 °C und einer Viskosität von 350 mPa·s bei 140 °C sowie mindestens ein Polyolefin (z. B. LDPE = Polyolefin niedriger Dichte) mit einem Schmelzpunktbereich von 100 °C bis 150 °C und einem Meltflowindex (MFI) von 50 g/10 min bis 1.000 g/10 min bei einer Belastung 2,16 kg und bei einer Prüftemperatur von 190 °C. Insbesondere wird anstelle oder zusätzlich zu den Polyolefinen mindestens ein metallocen-katalysiertes Polyolefin mit einem Schmelzpunktbereich von 100 °C und 150 °C und einem Meltflowindex (MFI) von 30 g/10 min bis 3.000 g/10 min bei einer Belastung 2,16 kg und bei einer Prüftemperatur von 230 °C eingesetzt.

Die erfindungsgemäße Zusammensetzung, gegebenenfalls mit oder ohne Füllstoff, eignet sich besonders für spanabhebende Modellerzeugungsverfahren sowie deren Verwendung für Genauguss-Prozesse speziell im Dental-, Schmuck- und Feinwerktechnikbereich. Sie enthält vorzugsweise mindestens ein metallocen-katalysiertes Polyolefin, insbesondere Polyethylene, vorzugsweise in einem Anteil von 5 bis 100 Gew.-%, insbesondere bevorzugt in einem Anteil von 10 bis 80 Gew.-%, insbesondere besonders bevorzugt von 25 bis 70 Gew.-% bezogen auf den Gesamtanteil der Formulierung.

Bevorzugt werden die Polyolefine durch Polymerisation von Ethylen in Gegenwart von Metallocenen als Katalysator hergestellt und weisen einen Schmelzindex MFI von mehr als 30 g/10 min, gemessen nach ISO 1133 bei einer Temperatur von 230 °C und einem Auflagegewicht von 2,16 kg auf.

Bevorzugt enthalten die erfindungsgemäß verwendeten Wachsformulierungen Polyolefine mit Schmelzviskositäten, gemessen bei einer Temperatur von 170 °C, von 50 bis 30.000 mPa·s, bevorzugt 50 bis 20.000 mPa·s, besonders bevorzugt 50 bis 400 mPa·s gemessen bei einer Temperatur von 140 °C.

In einer bevorzugten Ausführungsform werden Polyolefine mit einer zahlenmittleren Molmasse Mₙ im Bereich von 500 und 20.000 g/mol, bevorzugt im Bereich von 800 und 10.000 g/mol, besonders bevorzugt im Bereich von 1.000 und 5.000 g/mol eingesetzt und einer gewichtsmittleren Molmasse M_{w} im Bereich von 1.000 und 40.000 g/mol, bevorzugt im Bereich von 1.600 und 30.000 g/mol, besonders bevorzugt im Bereich von 1.000 und 20.000 g/mol. Die Bestimmung der Molmasse erfolgt gelpermeationschromatographisch.

Die erfindungsgemäß eingesetzten Formulierung haben den Vorteil zu den im Stand der Technik bekannten Wachsformulierungen, dass sie eine wesentlich bessere spanabhebende Bearbeitbarkeit (Fräsbarkeit) aufweisen eine gute Zugfestigkeit (tensile N) und Steifheit (elongation) bei entsprechender Härte zeigen ohne spröde zu sein, gleichzeitig ein günstiges Viskositätsverhalten beim Ausschmelzvorgang aus der Negativform haben, toxikologisch und ökologisch unbedenklich sind und in einfacher Weise zu handhaben sind.

Die beschriebenen Zusammensetzungen werden entsprechend genauem Einsatzgebiet der Genauguss-Wachsformulierung bezüglich Schmelzpunkt, Viskosität, Schrumpf sowie Härte und Sprödigkeit nach dem Fachmann bekannten Methoden eingestellt und angepasst.

Der in der Zusammensetzung enthaltenen Formulierung können Paraffine, Harze oder andere funktionalisierte Kohlenwasserstoffe beigemischt werden.

Der erfindungsgemäßen Zusammensetzung kann mindestens ein anorganischer Füllstoff zugesetzt werden. Diese können aus einer Vielzahl von anorganischen Salzen und Mineralien ausgewählt werden, bevorzugt sind hier zu nennen, Sande, Kreiden, natürliche gemahlene oder gefällte Calciumcarbonate, Calcium-Magnesium-Carbonate, Calciumoxid, Silicate, Schwerspat, Graphit sowie Russ. Auch blättchenförmige Füllstoffe, wie z. B. Vermiculit, Glimmer, Talk oder ähnliche Schichtsilikate, sind als Füllstoffe geeignet.

Ebenso können die organischen Füllstoffe aus einer Vielzahl von organischen Verbindungen (Polymere) ausgewählt werden, bevorzugt sind hier zu nennen, Polystyrol (PS), Polymethylmetacrylat (PMMA), Polyurethan (PUR), Acrylnitril-Butadien-Styrol (ABS) und Polycarbonat (PC), welche meist als feines Pulver im Bereich von Partikelgrößen kleiner 500 µm als Füllstoffe geeignet sind.

Füll- und Verstärkungsstoffe dienen im Allgemeinen dazu, die mechanischen und thermischen Eigenschaften gezielt zu beeinflussen sowie eine Material- und Kostenersparnis der Wachsformulierung zu erzielen. Die negative Beeinflussung des Füllstoffes im Hinblick auf das Ausschmelzverhalten und die Erhöhung des Restaschegehalts der Wachsformulierung gelten jedoch als nicht zu vernachlässigender Nachteil.

In einer bevorzugten Ausführungsform enthalten die Wachsformulierungen Polyolefine, insbesondere metallocen-katalysierten Polyolefine, die aus Homopolymeren des Propylens oder Copolymeren aus Propylen und Ethylen ausgewählt sind, wobei die Copolymeren vorzugsweise zu 70 bis 99,9, besonders bevorzugt zu 80 bis 99 Gew.-%, aus einer Olefinart bestehen.

Weiterhin können andere Wachse, Harze oder Polyolefine, etwa HochdruckPolyethylene (LDPE), wie sie z.B. unter dem Namen "Lupolen^{®}" bei Basell; "Riblene^{®}" bei Polymeri Europa, "Bralen^{®}" bei Slovnaft/TVK, etc. verfügbar sind, enthalten sein. Ferner Hochdruckpolyethylene, auch solche mit polaren Comonomeren wie z. B. Ethylen-Vinylacetat. Bevorzugt Polyolefine, welche durch metallocen-katalysiere Polymerisation hergestellt wurden, wie sie z. B. unter dem Namen "Metocene^{®}" bei Basell verfügbar sind. Die so beschaffene Formulierungen haben eine Viskosität im Bereich von 80 bis 10.000 mPa·s bei 140 °C, bevorzugt von 100 bis 9.000 mPa·s bei 140 °C, besonders bevorzugt von 120 bis 8.000 mPa·s bei 140 °C.

Gegebenenfalls können noch Pigmente, Farbstoffe, Antioxidantien, Geruchsbinder, antimikrobielle Wirksubstanzen, Lichtschutzmittel, Aroma- und Duftstoffe, Trennmittel sowie Additive zur Erhöhung/Reduzierung der Wärmeleitfähigkeit und oder Erhöhung/Reduzierung der elektrischen Leitfähigkeit (z. B. Kupfer, Graphit) vorhanden sein.

Für die Herstellung der metallocen-katalysierten Polyolefine, wie sie in den erfindungsgemäß eingesetzten Wachsformulierungen enthalten sind, werden Polyolefine mit Metallocenverbindungen der Formel I als Katalysator umgesetzt.

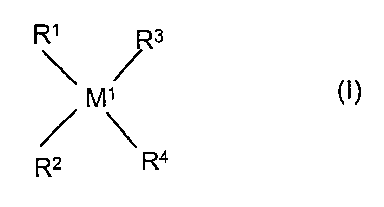

Diese Formel umfasst auch Verbindungen der Formel la, 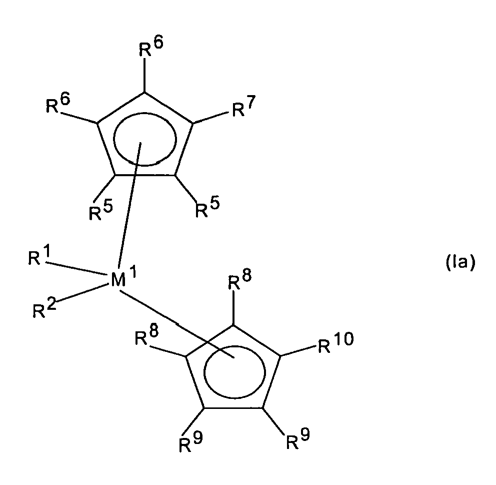 der Formel Ib, 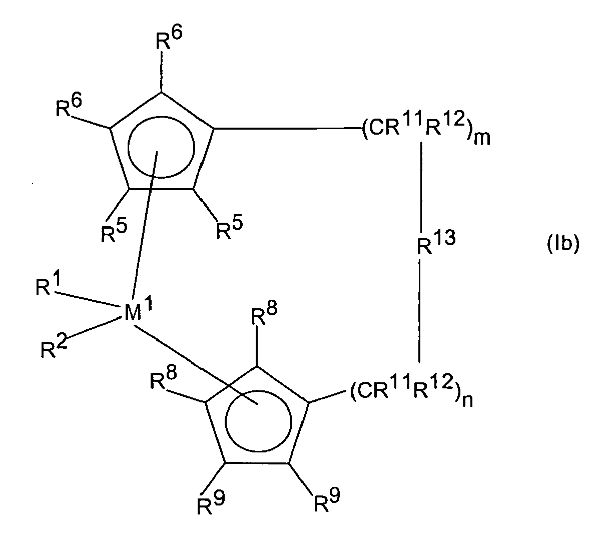 und der Formel Ic.

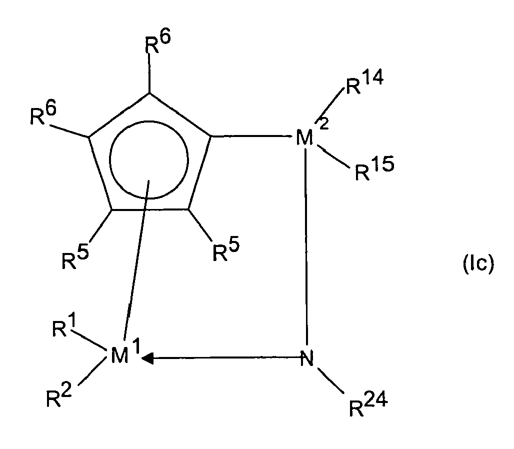

In den Formeln 1, la und Ib ist M¹ ein Metall der Gruppe IVb, Vb oder Vlb des Periodensystems, beispielsweise Titan, Zirkonium, Hafnium, Vanadium, Niob, Tantal, Chrom, Molybdän, Wolfram, vorzugsweise Titan, Zirkonium und Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbunden sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 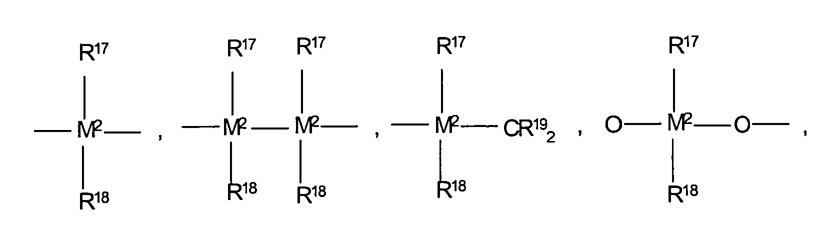 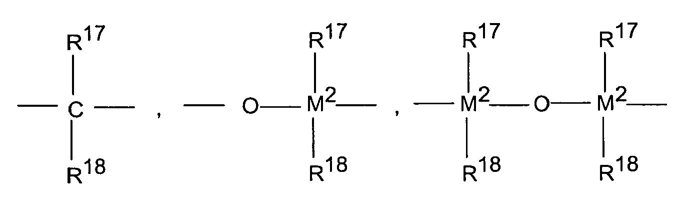 =BR¹⁷, =AIR¹⁷, -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀-, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Konkrete Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹_{3.} In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bis-trifluormethylphenyl, Mesityl, Xylyl oder Tolyl.

Zusätzlich ist häufig eine dritte Komponente erforderlich, um einen Schutz von polaren Katalysator-Giften aufrecht zu erhalten. Hierzu sind aluminiumorganische Verbindung wie z. B. Triethylaluminium, Tributylaluminium und andere sowie Mischungen aus diesen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Verfahren zur Herstellung derartiger metallocene-katalysierten Polyolefine sind beispielsweise im Stand der Technik wie EP-A-0 321 851, EP-A-0 321 852, EP-A-0 384 264, EP-A-0 571 882 und EP-A-0 890 584 beschrieben. Die Synthese der metallocen-katalysierten Polyolefine kann unter einem Druck von 0,1 bis 10 MPa in Gasphase oder in Suspension oder in Lösung in einem geeigneten Suspendier-/Lösungsmittel nach bekannten Technologien erfolgen. Metallocenkatalysatoren zur Herstellung von metallocene-katalysierten Polyolefinen sind chirale oder achirale Übergangsmetallverbindungen der Formel M¹Lₓ. Die Übergangsmetallverbindung M¹Lₓ enthält mindestens ein Metallzentralatom M¹, an das mindestens ein π-Ligand, z. B. ein Cyclopentadienylligand, gebunden ist. Darüber hinaus können Substituenten, wie z. B. Halogen-, Alkyl-, Alkoxy- oder Arylgruppen an das Metallzentralatom M1 gebunden sein. M¹ ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfasst auch Verbindungen mit mehr als einem Metallocenfragment, so genannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z. B. beschrieben in EP-A-0 632 063.

Beispiele für allgemeine Strukturformeln von Metallocenen sowie für deren Aktivierung mit einem Cokatalysator sind u.a. in EP-A-0 571 882 gegeben.

Da die erfindungsgemäß enthaltenen Wachsformulierung keine reaktiven chemischen Gruppen enthält, ist diese chemisch inert, so dass mit anderen handelsüblichen Materialien wie Metallen und Kunststoffen keine chemische Reaktion stattfindet, was in Bezug auf die Auslegung der Bauteile, Werkzeuge und deren Lebensdauer wünschenswert ist.

Die Wachsformulierungen werden vorzugsweise in Form von Granulat oder Pulver verwendet. Dreidimensionale Körper wie, Vorformlinge, Rohlinge, Platten, Profile und Blöcke können so problemlos geformt werden.

Die nachfolgenden Beispiele sollen die Erfindung näher erläutern, ohne sie jedoch auf die konkret angegebenen Ausführungsformen zu beschränken. Prozentangaben sind, wenn nicht anders angegeben, als Gewichtsprozente zu verstehen.

### Beispiele:

Die Schmelzviskositäten wurden nach DIN 53019 mit einem Rotationsviskosimeter, die Tropfpunkte nach ASTM D3954, die Erweichungspunkte Ring/Kugel nach ASTM D3104 bei puren Licocene® Performance Polymere bestimmt. Das Molmassengewichtsmittel M_{w} und das Molmassenzahlenmittel Mₙ wurden durch Gelpermeationschromatographie bei einer Temperatur von 135 °C in 1,2-Dichlorbenzol ermittelt.

Das erfindungsgemäß eingesetzte metallocen-katalisierte Poleolefin (Licocene^{®} Performance Polymer) wurde nach dem Stand der Technik gemäß EP-A- 0 384 264 angegebenen Verfahren hergestellt.

Hersteller der genannten Wachse und metallocene-katalysierten Polyolefine (Licocene^{®} Performance Polymers) ist die Clariant Produkte (Deutschland) GmbH.

Paraffine:
Paraffine mit Kettenlängen ab C₂₀
mikrokristalline Paraffine
makrokristalline Paraffine
FT-Paraffine (Fischer-Tropsch)

Harze:
Naturharze
Kunstharze

metallocen-katalysierte Polyolefine:
Licocene^{®} PE 4201 TP
Licocene^{®} PE 5301 TP
Licocene^{®} PP 6102 TP
Licocene^{®} PP 6502 TP
Licocene^{®} PP 7502 TP
Metocene^{®} von Basell

Wachse:
unpolare Polyethylenwachse:
Licowax^{®} PE 130
Licowax^{®} PE 190
Licowax^{®} PE 520

unpolare Polypropylenwachse:
Licowax^{®} PP 220
Licowax^{®} PP 230
polare Polyethylenwachse:
Licowax^{®} PED 121
Licowax^{®} PED 153
Licowax^{®} PED 522

Umsetzungsprodukte aus Fettsäuren und mehrwertigen Diaminen (Amidwachse) wie:
Ethylenebisstearamid
Licowax^{®} C

Montansäure und Montansäureester:
Licowax^{®} E
Licowax^{®} S
Licowax^{®} OP
Licowax^{®} LP
Licowax^{®} KP

Polyolefine niedriger Dichte (LDPE):
Bralen^{®} von Slovnaft /TVK
Lupolen^{®} von Basell
Riblene^{®} von Polimeri Europa

Die Schmelzviskositäten wurden nach DIN 53019 mit einem Rotationsviskosimeter, die Tropfpunkte nach ASTM D3954, die Erweichungspunkte Ring/Kugel nach ASTM D3104, bestimmt. Das Molmassengewichtsmittel M_{w} und das Molmassenzahlenmittel Mₙ wurden durch Gelpermeationschromatographie bei einer Temperatur von 135 °C in 1,2-Dichlorbenzol ermittelt (bei Licocene^{®} Performance Polymer)

### Beispiel 1

Es wurde eine Genauguss-Wachsformulierung aus folgenden Komponenten hergestellt:
70 % Licocene^{®} PE 4201 (metallocen-katalisiertes Polyolefin)
30 % Riblenene^{®} FL 30 (Polyolefin niedriger Dichte, LDPE)

Charakterisiert wird das Material durch einen Erweichungspunkt von ca. 150 °C und eine dynamische Viskosität von ca. 4.000 mPa·s bei 140 °C. Mechanische Prüfungen an Norm-Prüfkörpern ergaben folgende Messwerte:

**Kugeldruckhärte(DIN 51920):**

| Last | Kugeldurchmesser | Eindringtiefe (µm) | | Härte | | Anteil (%) | |
|---|---|---|---|---|---|---|---|
| (kg) | (mm) | Belastung | Entlastung | DGF M-III 9c(98) [bar] | in Anlehnung an ISO 2039-1 | elastisch | plastisch |
| 10 | 0,005 | 205 | 130 | 75 | 30 | 35 | 65 |

Dichte: 0,92 g/ml

### Beispiel 2

Es wurde eine Genauguss-Wachsformulierung aus folgenden Komponenten hergestellt:
70 % Licocene^{®} PE 4201 (metallocen-katalisiertes Polyolefin)
30 % Bralen^{®} SA 70-21 (Polyolefin niedriger Dichte, LDPE)

Charakterisiert wird das Material durch einen Erweichungspunkt von ca. 130 °C und eine dynamische Viskosität von 2.300 mPa·s bei 140 °C. Mechanische Prüfungen an Norm-Prüfkörpern ergaben folgende Messwerte:

**Kugeldruckhärte(DIN 51920):**

| Last | Kugeldurchmesser | Eindringtiefe (µm) | | Härte | | Anteil (%) | |
|---|---|---|---|---|---|---|---|
| (kg) | (mm) | Belastung | Entlastung | DGF M-III 9c(98) [bar] | in Anlehnung an ISO 2039-1 | elastisch | plastisch |
| 10 | 0,005 | 208 | 131 | 30 | 30 | 37 | 63 |

Dichte: 0,92 g/ml

### Beispiel 3

Es wurde eine Genauguss-Wachsformulierung aus folgenden Komponenten hergestellt:
70 % Licocene^{®} PE 4201 (metallocen-katalisiertes Polyolefin)
30 % Bralen^{®} SA 200-22 (Polyolefin niedriger Dichte, LDPE)

Charakterisiert wird das Material durch einen Erweichungspunkt von ca. 128 °C und eine dynamische Viskosität von 1.500 mPa·s bei 140 °C. Mechanische Prüfungen an Norm-Prüfkörpern ergaben folgende Messwerte:

**Kugeldruckhärte(DIN 51920):**

| Last | Kugeldurchmesser | Eindringtiefe (µm) | | Härte | | Anteil (%) | |
|---|---|---|---|---|---|---|---|
| (kg) | (mm) | Belastung | Entlastung | DGF M-III 9c (98) [bar] | in Anlehnung an ISO 2039-1 | elastisch | plastisch |
| 10 | 0,005 | 212 | 138 | 31 | 30 | 35 | 65 |

Dichte: 0,93 g/ml

### Beispiel 4

Es wurde eine Genauguss-Wachsformulierung aus folgenden Komponenten hergestellt:
70 % Licocene^{®} PE 4201 (metallocen-katalisiertes Polyolefin)
30 % Metocene^{®} HM 1423 (metallocen-katalisiertes Polyolefin)

Charakterisiert wird das Material durch einen Erweichungspunkt von ca. 148 °C und eine dynamische Viskosität von 1.150 mPa·s bei 140 °C. Mechanische Prüfungen an Norm-Prüfkörpern ergaben folgende Messwerte:

**Kugeldruckhärte(DIN 51920):**

| Last | Kugeldurchmesser | Eindringtiefe (µm) | | Härte | | Anteil (%) | |
|---|---|---|---|---|---|---|---|
| (kg) | (mm) | Belastung | Entlastung | DGF M-III 9c (98) [bar] | in Anlehnung an ISO 2039-1 | elastisch | plastisch |
| 10 | 0,005 | 135 | 90 | 47 | 47 | 33 | 67 |

Dichte: 0,94 g/ml

### Beispiel 5

Es wurde eine Genauguss-Wachsformulierung aus folgenden Komponenten hergestellt:
70 % Licocene^{®} PE 4201 (metallocen-katalisiertes Polyolefin)
30 % Metocene^{®} HM 1425 (metallocen-katalisiertes Polyolefin)

Charakterisiert wird das Material durch einen Erweichungspunkt von ca. 147 °C und eine dynamische Viskosität von 850 mPa·s bei 140 °C. Mechanische Prüfungen an Norm-Prüfkörpern ergaben folgende Messwerte:

**Kugeldruckhärte (DIN 51920):**

| Last | Kugeldurchmesser | Eindringtiefe (µm) | | Härte | | Anteil (%) | |
|---|---|---|---|---|---|---|---|
| (kg) | (mm) | Belastung | Entlastung | DGF M-III 9c(98) [bar] | in Anlehnung an ISO 2039-1 | elastisch | plastisch |
| 10 | 0,005 | 125 | 106 | 50 | 50 | 16 | 84 |

Dichte: 0,94 g/ml

### Beispiel 6

Es wurde eine Genauguss-Wachsformulierung aus folgenden Komponenten hergestellt:
70 % Licocene^{®} PE 4201 (metallocen-katalisiertes Polyolefin)
20 % Metocene^{®} HM 1425 (metallocen-katalisiertes Polyolefin)
10 % Graphit Pulver

Charakterisiert wird das Material durch einen Erweichungspunkt von ca. 147 °C und eine dynamische Viskosität von 1.100 mPa·s bei 140 °C. Mechanische Prüfungen an Norm-Prüfkörpern ergaben folgende Messwerte:

**Kugeldruckhärte (DIN 51920):**

| Last | Kugeldurchmesser | Eindringtiefe (µm) | | Härte | | Anteil (%) | |
|---|---|---|---|---|---|---|---|
| (kg) | (mm) | Belastung | Entlastung | DGF M-III 9c(98) [bar] | in Anlehnung an ISO 2039-1 | elastisch | plastisch |
| 10 | 0,005 | 125 | 106 | 73 | 50 | 15 | 85 |

Dichte: 1,01 g/ml

### Beispiel 7

Es wurde eine Genauguss-Wachsformulierung aus folgenden Komponenten hergestellt:
68 % Licocene^{®} PE 4201 (metallocen-katalisiertes Polyolefin)
30 % Metocene^{®} HM 1425 (metallocen-katalisiertes Polyolefin)
10 % Licocene^{®} PP 7502 fine powder (metallocen-katalisiertes Polyolefin)

Charakterisiert wird das Material durch einen Erweichungspunkt von ca. 153 °C und eine dynamische Viskosität von 750 mPa·s bei 140 °C. Mechanische Prüfungen an Norm-Prüfkörpern ergaben folgende Messwerte:

**Kugeldruckhärte (DIN 51920):**

| Last | Kugeldurchmesser | Eindringtiefe (µm) | | Härte | | Anteil (%) | |
|---|---|---|---|---|---|---|---|
| (kg) | (mm) | Belastung | Entlastung | DGF M-III 9c(98) [bar] | in Anlehnung an ISO 2039-1 | elastisch | plastisch |
| 10 | 0,005 | 125 | 106 | 73 | 50 | 10 | 90 |

Dichte: 0,94 g/ml

## Patentansprüche

1. Zusammensetzung enthaltend
a.) eine Wachsformulierung enthaltend ein oder mehrere Polyolefine
• mit einem Schmelzpunkt im Bereich von 80 bis 165°C bei einer Viskosität von < 400 mPa·s bei 140 °C,
• einem Erweichungspunkt Ring/Kugel im Bereich von 50 bis 165 °C ,
• einer Schmelzviskosität, gemessen bei einer Temperatur von 140 °C, im Bereich von 30 bis 40.000 mPa·s und
• einer Glasübergangstemperatur Tg von maximal -10 °C, wobei bevorzugt mindestens ein Polyolefin durch metallocen-katalytische Polymerisation hergestellt wurde
und
b.) gegebenenfalls ein oder mehrere Füllstoffe,
wobei der Schmelzpunkt der Zusammensetzung < 165 °C bevorzugt < 100 °C ist, bei einer Viskosität von < 10.000 mPa·s bei 140 °C.

2. Zusammensetzung nach Anspruch 1, **dadurch gekennzeichnet, dass** die Schmelzenthalpie der eingesetzten Polyolefine im Bereich von 70 bis 280 J/g bei Dichten von 0,90 bis 0,97 kg/dm³ liegt.

3. Zusammensetzung nach Anspruch 1 oder 2, **dadurch gekennzeichnet, dass** die Wachsformulierung a) metallocen-katalysierte Polyolefine in einem Verhältnis von 5 bis 100 Gew% bezogen auf den Gesamtanteil der Wachsformulierung enthält.

4. Zusammensetzung nach mindestens einem der vorhergehenden Ansprüche, **dadurch gekennzeichnet, dass** die Polyolefine Schmelzviskositäten von 50 bis 30.000 mPa·s bei einer Temperatur von 170 °C aufweisen.

5. Zusammensetzung nach mindestens einem der vorhergehenden Ansprüche, **dadurch gekennzeichnet, dass** die Polyolefine eine zahlenmittlere Molmasse Mn im Bereich von 500 bis 20.000 g/mol und eine gewichtsmittlere Molmasse Mw im Bereich von 1.000 bis 40.000 g/mol besitzen.

6. Zusammensetzung nach mindestens einem der vorhergehenden Ansprüche, **dadurch gekennzeichnet, dass** diese mindestens einen anorganischen Füllstoff aus der folgenden Gruppe enthält: anorganische Salzen und Mineralien, wie Sande, Kreiden, natürliche gemahlene oder gefällte Calciumcarbonate, Calcium-Magnesium-Carbonate, Calciumoxid, Silicate, Schwerspat, Graphit, Russ, Vermiculit, Glimmer, Talk und/oder Schichtsilikate.

7. Zusammensetzung nach mindestens einem der vorhergehenden Ansprüche, **dadurch gekennzeichnet, dass** diese mindestens einen organischen Füllstoff aus der folgenden Gruppe enthält: Polyolefine (PO), Polystyrol (PS), Polymethylmetacrylat (PMMA), Polyurethan (PUR), Acrylnitril-Butadien-Styrol (ABS) und Polycarbonat (PC),

8. Zusammensetzung nach mindestens einem der vorhergehenden Ansprüche, **dadurch gekennzeichnet, dass** die Wachsformulierung a) metallocen-katalysierten Polyolefine enthält, die aus Homopolymeren des Propylens oder Copolymeren aus Propylen und Ethylen ausgewählt sind, wobei die Copolymeren vorzugsweise zu 70 bis 99,9, besonders bevorzugt zu 80 bis 99 Gew.-%, aus einer Olefinart bestehen.

9. Zusammensetzung nach mindestens einem der vorhergehenden Ansprüche, **dadurch gekennzeichnet, dass** diese zusätzlich noch andere Wachse, Harze, Pigmente, Farbstoffe, Antioxidantien, Geruchsbinder, antimikrobielle Wirksubstanzen, Lichtschutzmittel, Aroma- und/oder Duftstoffe, Trennmittel, Additive zur Erhöhung/Reduzierung der Wärmeleitfähigkeit und/oder Erhöhung/Reduzierung der elektrischen Leitfähigkeit enthält.

10. Verwendung einer Zusammensetzung nach mindestens einem der Ansprüche 1 bis 9, für spanabhabende Modellerzeugungsverfahren, für den Genauguss-Prozess oder die Hohlkernerzeugung.
